# EUROPÄISCHE PATENTSCHRIFT

(11) **EP 2 272 146 B1**
(45) Veröffentlichungstag und Bekanntmachung des Hinweises auf die Patenterteilung: **27.07.2016**
(21) Anmeldenummer: 09727163.9
(22) Anmeldetag: 26.03.2009
(51) Int. Cl.: H02H 9/04, H02H 3/04

(54) **SCHUTZVORRICHTUNG**
PROTECTION DEVICE
DISPOSITIF DE PROTECTION

(30) Priorität: 31.03.2008 DE 102008016589
(43) Veröffentlichungstag der Anmeldung: 12.01.2011
(73) Patentinhaber: Weidmüller Interface GmbH & Co. KG, 32758 Detmold (DE)
(72) Erfinder: KASPER, Norbert, 32756 Detmold (DE)
(74) Vertreter: Specht, Peter
(86) Internationale Anmeldenummer: PCT/EP2009/053623
(87) Internationale Veröffentlichungsnummer: WO 2009/121799

(56) Entgegenhaltungen:
- EP-A- 0 441 722
- EP-A- 0 862 255
- DE-A1- 3 813 914
- DE-A1-102004 024 657

## Beschreibung

Die Erfindung betrifft eine Schutzvorrichtung zum Schutz eines elektrischen Systems gemäß der im Oberbegriff des Anspruchs 1 angegebenen Gattung.

Die in Rede stehende Schutzvorrichtung schützt ein elektrisches System vor Beeinträchtigung und/oder Zerstörung durch ein Störereignis.

Im Kontext der vorliegenden Offenbarung wird unter einem Störereignis ein Ereignis verstanden, durch dessen Auftreten ein elektrisches System mit elektrischer Energie beaufschlagt wird, und zwar derart, dass das elektrische System in seiner ordnungsgemäßen Funktion beeinträchtigt oder zerstört wird. Beispiele für Störereignisse sind Blitzeinschläge oder statische Entladungen in deren Folge Überspannungsimpulse und / oder Überstromimpulse, beispielweise galvanisch, induktiv oder kapazitiv, in das elektrische System eingekoppelt werden und dieses in seiner Funktion beeinträchtigen oder zerstören.

Vorstehend bezeichnete Schutzvorrichtung für elektrische Systeme sind dem Fachmann im Aufbau und Funktion bekannt und bedürfen daher keiner weiteren Erläuterung im Rahmen der vorliegenden Erfindung.

Eine solche Schrtzvorrichtung ist aus EP 0 862 255 bekannt.

Nachteilig an den bekannten Schutzvorrichtungen ist jedoch, dass diese einen verhältnismäßig hohen Aufwand bei Überprüfung, Wartung und einem ggf. erforderlichen Austausch erfordern.

Demgemäss ist es eine Aufgabe der Erfindung, eine Schutzvorrichtung zu schaffen, die die geschilderten Nachteile behebt.

Die Erfindung löst die Aufgabe mit einer Schutzvorrichtung mit den Merkmalen des Anspruches 1.

Erfindungsgemäß wird ein durch ein Störereignis zerstörtes Schutzelement der Schutzvorrichtung deaktiviert, so dass von diesem zerstörten Schutzelement keine Beeinträchtigung des zu schützenden elektrischen Systems mehr ausgeht und dieses, zumindest zeitweise, ohne einen Eingriff von Fachpersonal weiterbetrieben werden kann.

Der Aufwand für eine Überprüfung, Wartung und einen ggf. erforderlichen Austausch wird dadurch in vorteilhafter Weise verringert.

In einer weiteren bevorzugten Ausführung der Erfindung wird nach der Deaktivierung des durch ein Störereignis zerstörten Schutzelements ein dieses in seiner Funktion ersetzendes Ersatzschutzelement aktiviert, so dass nach der, durch ein Störereignis erfolgen, Zerstörung des Schutzelements die Funktion der Schutzeinrichtung in vollem Umfang weiterhin gewährleistet ist. Der Aufwand für eine Überprüfung, Wartung und einen ggf. erforderlichen Austausch wird so in vorteilhafter Weise weiter verringert, da sich die Zahl Störereignisse erhöht, die auftreten können, bevor Fachpersonal eine Überprüfung, eine Wartung oder ggf. einen Austausch durchführen muss.

Weitere Ausgestaltungen der Erfindung ergeben sich aus der gegenständlichen Beschreibung, den Zeichnungen und den Merkmalen der Unteransprüche.

Die Erfindung wird nachfolgend in Verbindung mit den beiliegenden Zeichnungen und der gegenständlichen Beschreibung näher erläutert.

### Es zeigen:

- Fig. 1:: eine schematische Darstellung einer erfindungsgemäßen Schutzvorrichtung in Form einer elektrischen Schaltung, und
- Fig. 2:: eine schematische Darstellung einer weiteren Ausführungsform der Erfindung in Form einer elektrischen Schaltung.

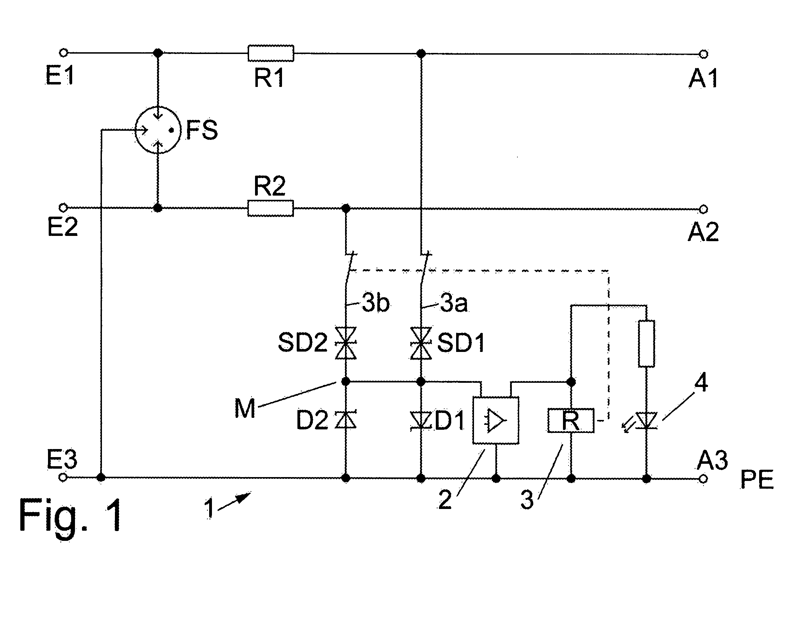

Fig. 1 zeigt eine beispielhafte Schutzvorrichtung 1 zum Schutz elektrischer Systeme gegen Störereignisse.

Zunächst wird der Aufbau der Schutzvorrichtung beschrieben:
Im Eingangsbereich der Schutzvorrichtung 1 liegt jeweils eine Funkenstrecke zwischen zwei Zweigen E1-A1 und E3-A3 sowie zwischen zwei Zweigen E2-A2 und E3-A3, beide Funkenstrecken sind in der vorliegenden Ausführungsform in einem mit FS bezeichneten Bauteil untergebracht. Dieser Teil der Schutzvorrichtung wird als Grobschutz bezeichnet und "vernichtet" den größten Teil der durch ein Störereignis in die Schutzvorrichtung 1 eingekoppelten Energie.

Der restliche Teil der Schutzvorrichtung 1 wird als Feinschutz bezeichnet und dient vorrangig dazu, die auftretenden Spannungen auf ein für das zu schützende elektrische System ungefährliches Maß zu begrenzen. Eine Eingangsklemme E1 ist über einen Widerstand R1 mit einer Ausgangsklemme A1 verbunden. Parallel zur Ausgangsklemme A1 und zu einer auf PE-Potential liegenden Ausgangsklemme A3 liegt eine Reihenschaltung aus einer Suppressordiode SD1 und antiparallel geschalteten Dioden D1 und D2. Entsprechend ist eine Eingangsklemme E2 über einen Widerstand R2 mit einer Ausgangsklemme A2 verbunden, parallel zur Ausgangsklemme A2 und zur auf PE-Potential liegenden Ausgangsklemme A3 liegt eine Reihenschaltung aus einer Suppressordiode SD2 und den antiparallel geschalteten Dioden D1 und D2.

Die Anzahl der vorstehend beschriebenen Zweige ist nicht auf zwei begrenzt. Dieser Aufbau ist lediglich beispielhaft zu verstehen und kann, je nach Anwendungsfall, unterschiedlich ausfallen ohne den Bereich der vorliegenden Erfindung zu verlassen.

Ein nicht dargestelltes, gegen Störereignisse zu schützendes elektrisches System, beispielsweise ein Messverstärker oder ein Industrie-PC, ist über die Ausgangsklemmen A1 bis A3 an die Schutzvorrichtung angeschlossen. Die Eingangsklemmen E1 - E3 sind je nach Anwendung ihrerseits mit Signalquellen und / oder mit elektrische Energie liefernden Einrichtungen, beispielsweise ein elektrische Versorgungsnetz, verbunden.

In jedem Fall erfolgt die Installation und die Verschaltung von Schutzvorrichtung 1 und zu schützendem elektrischen System derart, dass im Falle eines Störereignisses eingekoppelte elektrische Energie auf der Eingangsseite der Schutzvorrichtung 1 eingekoppelt wird. Dies ist dem Fachmann bekannt.

Tritt ein Störereignis auf, so wird elektrische Energie in die Schutzvorrichtung 1 eingekoppelt. In Folge dieser Einkopplung treten Ströme durch Schutzelemente FS, SD1, SD2 auf, die zur Zerstörung dieser Schutzelementen führen können. Von derartigen Zerstörungen sind insbesondere die hier als Suppressordioden ausgeführten Schutzelemente SD1 und SD2 betroffen.

Wird eine Suppressordioden SD1, SD2 in Folge eines Störereignisses von einem zu hohen - d.h. zur Zerstörung führenden - Strom durchflossen, werden diese zerstört und zwar in der Weise, dass die defekte Suppressordiode einen Kurzschluss zwischen ihren Anschlussleitungen aufweist. Durch dieses Verhalten der Suppressordioden wird nach einem Störereignis, bei dem diese zerstört wurden, eine niederohmige Verbindung zwischen der Ausgangklemme A1 und dem Schaltungspunkt M, sowie zwischen der Ausgangsklemme A2 und dem Schaltungspunkt M hergestellt.

Dieses Verhalten der Suppressordioden SD1, SD2 schützt im Falle ihrer Zerstörung das nachgeschaltete elektrische System vor Beeinträchtigung bzw. Zerstörung im Falle dann nachfolgende auftretender Störereignisse, da dann auftretende Spannungen an den Klemmenpaaren A1-A3 und A2-A3 auf ein für das nachfolgende elektrische System unschädliches Maß begrenzt werden. Dieses Verhalten wird auch als "failsave" bezeichnet.

Allerdings ist in diesem Zustand ein fehlerfreier Betrieb des an die Klemmen A1, A2 und A3 angeschlossenen elektrischen Systems nicht mehr möglich, da dann Mess- und / oder Energiesignale nicht mehr unbeeinflusst von der Schutzvorrichtung an das zu schützende System übertragen werden.

Erfindungsgemäß werden daher die Schutzelemente SD1 und SD2 mittels einer Zustandserkennungseinrichtung 2 auf vorher festgelegte Zustände überwacht. Hierzu führt die Zustandserkennungseinrichtung 2 mittels nicht dargestellter Messmittel Spannungsmessungen an einem mit M bezeichneten Schaltungspunkt der Schutzvorrichtung 1 durch. Die Voraussetzungen für einen derartigen Zustand können in einer nicht dargestellten Speichereinrichtung der Zustandserkennungseinrichtung 2 hinterlegt sein. Bei derartigen Voraussetzungen kann es sich um einen bestimmten Spannungswert, einen bestimmten Spannungswertebereich oder einen bestimmten Spannungsverlauf handeln.

Die Vorraussetzungen für die hinterlegten Zustände werden selbstverständlich derart gewählt, dass diese auf einen Defekt der betreffenden Schutzelemente schließen lassen.

Erkennt die Zustandserkennungseinrichtung 2 einen vorbestimmten Zustand, so werden die entsprechenden Schutzelemente, hier SD1 und SD2 über von der Schalteinrichtung betätigte Öffner, hier die Schaltkontakte 3a, 3b ein-, mehr- oder allpolig von der Schutzvorrichtung 1 abgetrennt. Auf diese Weise üben die - defekten Schutzelemente SD1 und SD2 - keinen Einfluss mehr auf die Schutzvorrichtung aus. Das zu schützende elektrische System kann jetzt, mit einem nunmehr verminderten und nur noch vom Bauteil FS bereitgestellten Schutz, weiterbetrieben werden.

Zur Erhöhung der Messsicherheit kann die Zustandserkennungseinrichtung 2 so ausgestaltet werden, dass eine Deaktivierung eines Schutzelements SD1, SD2 erst dann erfolgt, wenn die Zustandserkennungseinrichtung 2 bei einer bestimmten Anzahl von aufeinanderfolgenden Messungen zu gleichen - auf einen Defekt der Schutzelementen SD1 und/oder SD2 hinweisenden - Messergebnissen/erkannten Zuständen kommt.

Weiterhin kann es sinnvoll sein, die Zustandserkennungseinrichtung 2 so auszugestalten, dass die zur Zustandserkennung durchzuführenden Messungen in vorbestimmbaren Zeitabständen, beispielsweise alle 100 Millisekunden, durchgeführt werden, und/oder die Messungen zu bestimmten festgelegten Zeitpunkten durchzuführen.

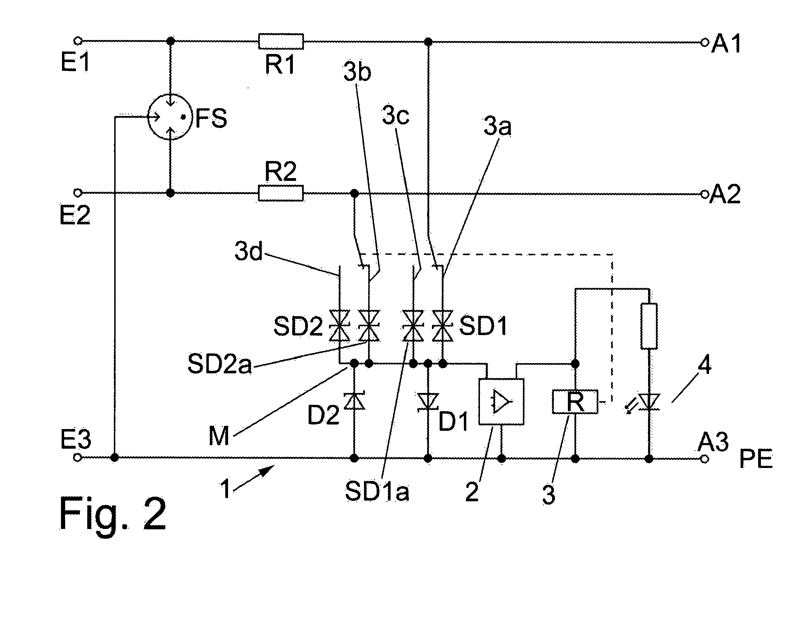

In einem weiteren, in Fig. 2. gezeigten, Ausführungsbeispiel der Erfindung weist die Schutzvorrichtung 1 zusätzlich Ersatzschutzelemente, die Suppressordioden SD1a und SD2a auf, die nach einer Deaktivierung der Schutzelemente SD1 und SD2 über von der Schalteinrichtung 3 ansteuerbare Schließer 3c, 3d aktiviert werden und dann die Schutzfunktion der zuvor deaktivierten Schutzelemente SD1, SD2 übernehmen.

Werden die zur Deaktivierung/Aktivierung von Schutzelementen erforderlichen Zu- oder Abschaltungen ein-, mehr- oder allpolig ausgeführt, so muss ein entsprechendes Schaltelement, beispielsweise ein Relais oder ein bistabiles Relais, selbstverständlich die entsprechende Anzahl von Schaltkontakten, Öffner und/oder Schließer, aufweisen.

Wird von der Zustandserkennungseinrichtung 2 ein vorbestimmter Zustand erkannt, so kann dieser Zustand über eine Anzeigeeinrichtung 4, beispielsweise eine Leuchtdiode mit einem Vorwiederstand oder über eine - nicht in einer Figur dargestellten - Meldeeinrichtung, beispielsweise ein bistabiles Relais mit einem geschalteten Öffner, angezeigt und/oder zur Weiterverarbeitung an weitere, gegebenenfalls übergeordnete elektrische Einrichtungen weitergemeldet werden.

Die Erfindung ist nicht auf die beschriebenen Ausführungsbeispiele beschränkt, die auf vielfache Weise abgewandelt werden können. Insbesondere ist es möglich die genannten Merkmale in anderen als den genannten Kombinationen auszuführen.

Weiterhin ist es denkbar, die Erfindung so auszugestalten, dass die Aktivierung von Ersatzschutzelementen in kaskadenartiger Weise erfolgt. So kann beispielsweise nach dem Auftreten eines ersten Störereignisses ein erstes Ersatzschutzelement aktiviert werden, nach dem Auftreten eines zweiten Störereignisses ein zweites Ersatzschutzelement aktiviert werden, usw. Selbstverständlich sind vor einer Aktivierung eines Ersatzschutzelements die entsprechenden, möglicherweise defekten, Schutzelemente zu deaktivieren, derart wie dies in der vorliegenden Offenbarung beschrieben ist.

Im Rahmen der Erfindung ist es weiterhin auch denkbar andere als die genannten Schutzelemente zu deaktivieren und/oder durch entsprechende dann zu aktivierende Schutzelemente zu ersetzen.

## Patentansprüche

1. Schutzvorrichtung (1) mit wenigstens einem Schutzelement (SD1, SD2) zum Schutz eines elektrischen Systems vor Beeinträchtigung und/oder Zerstörung durch ein Störereignis, wobei die Schutzvorrichtung (1) eine das wenigstens eine Schutzelement (SD1, SD2) überwachende Zustandserkennungsseinrichtung (2) aufweist, die dazu ausgelegt ist, Messungen zur Erkennung eines vorbestimmten Zustands des wenigstens einen Schutzelements (SD1, SD2) durchzuführen, und eine von der Zustandserkennungseinrichtung (2) angesteuerte Schalteinrichtung (3), die dazu ausgelegt ist, das wenigstens eine Schutzelement (SD1, SD2) zu deaktivieren, wenn die Zustandserkennungseinrichtung (2) den vorbestimmbaren Zustand des wenigstens einen Schutzelements (SD1, SD2) erkennt, **dadurch gekennzeichnet, dass** die Schutzvorrichtung (1) mindestens ein durch die Schaltvorrichtung (3) aktivierbares Ersatzschutzelement (SD1a, SD2a) aufweist, wobei die Schalteinrichtung (3) das Ersatzschutzelement (SD1a, SD2a) aktiviert, nachdem die Schalteinrichtung (3) das Schutzelement (SD1, SD2) deaktiviert hat, dass die Deaktivierung durch die Schalteinrichtung (3) erst nach einer vorbestimmbaren Anzahl von Messungen erfolgt, wobei bei jeder dieser Messungen der vorbestimmbare Zustand des wenigstens einen Schutzelements (SD1, SD2) erkannt wurde, und dass die Schalteinrichtung (3) ein Relais (R) mit einer Anzahl von Öffnern (3a, 3b) und/oder Schließern (3c, 3d) aufweist, wobei das Relais (R) als bistabiles Relais ausgeführt ist.

2. Schutzvorrichtung nach Anspruch 1, **dadurch gekennzeichnet, dass** der vorbestimmbare Zustand durch einen vorbestimmbaren Spannungswert festgelegt ist.

3. Schutzvorrichtung nach einem der vorstehenden Ansprüche, **dadurch gekennzeichnet, dass** der vorbestimmbare Zustand durch einen vorbestirnmbaren Spannungswertebereich festgelegt ist.

4. Schutzvorrichtung nach einem der vorstehenden Ansprüche, **dadurch gekennzeichnet, dass** der vorbestimmbare Zustand durch einen vorbestimmbaren Spannungsverlauf festgelegt ist.

5. Schutzvorrichtung nach einem der vorstehenden Ansprüche, **dadurch gekennzeichnet, dass** die von der Zustandserkennungseinrichtung (2) durchgeführten Messungen in vorbestimmbaren Zeitabständen und/oder zu vorbestimmbaren Zeitpunkten durchgeführt werden.

6. Schutzvorrichtung nach einem der vorstehenden Ansprüche, **dadurch gekennzeichnet, dass** die Deaktivierung des wenigstens einen Schutzelements (SD1, SD2) als eine einpolige Abtrennung des Schutzelements erfolgt.

7. Schutzvorrichtung nach einem der vorstehenden Ansprüche, **dadurch gekennzeichnet, dass** die Deaktivierung des wenigstens einen Schutzelements (SD1, SD2) als eine mehr- oder allpolige Abtrennung des Schutzelements erfolgt.

8. Schutzvorrichtung nach einem der vorstehenden Ansprüche, **dadurch gekennzeichnet, dass** die Schalteinrichtung (3) eine Anzeigeeinrichtung (4) zur Anzeige des von der Zustandserkennungseinrichtung (2) erkannten vorbestimmbaren Zustands aufweist.

9. Schutzvorrichtung nach einem der vorstehenden Ansprüche, **dadurch gekennzeichnet, dass** die Schalteinrichtung (3) eine Meldeeinrichtung zur Weitermeldung des von der Zustandserkennungseinrichtung (2) erkannten vorbestimmbaren Zustands aufweist.

## Claims

1. A protective device (1) comprising at least one protective element (SD1, SD2) for the protection of an electrical system against impairment and/or destruction by a disruptive event, wherein the protective device (1) has a status detection device (2) which monitors the at least one protective element (SD1, SD2), which status detection device is configured to perform measurements for detecting a predefined status of the at least one protective element (SD1, SD2), and a switching device (3) actuated by the status detection device (2), which is configured to deactivate the at least one protective element (SD1, SD2) when the status detection device (2) detects the predefinable status of the at least one protective element (SD1, SD2), **characterized in that** the protective device (1) has at least one back-up protective element (SD1 a, SD2a), which can be activated by the switching device (3), wherein the switching device (3) activates the back-up protective element (SD1a, SD2a) after the switching device (3) has deactivated the protective element (SD1, SD2), that deactivation is implemented by the switching device (3) only after a predefinable number of measurements, wherein with each of these measurements, the predefinable status of the at least one protective element (SD1, SD2) has been detected, and that the switching device (3) has a relay (R) with a number of break-contact elements (3a, 3b) and/or make-contact elements (3c, 3d), wherein the relay (R) is embodied as a bistable relay.

2. The protective device of claim 1, **characterized in that** the predefinable status is determined using a predefinable voltage level.

3. The protective device of any one of the preceding claims, **characterized in that** the predefinable status is determined using a predefinable voltage level range.

4. The protective device of any one of the preceding claims, **characterized in that** the predefinable status is determined using a predefinable voltage profile.

5. The protective device of any one of the preceding claims, **characterized in that** the measurements performed by the status detection device (2) can be performed at predefinable time intervals and/or at predefinable times.

6. The protective device of any one of the preceding claims, **characterized in that** the deactivation of the at least one protective element (SD1, SD2) involves a single-pole separation of the protective element.

7. The protective device of any one of the preceding claims, **characterized in that** the deactivation of the at least one protective element (SD1, SD2) involves a multi- or all-pole separation of the protective element.

8. The protective device of any one of the preceding claims, **characterized in that** the switching device (3) has a display device (4) for displaying the predefinable status which has been detected by the status detection device (2).

9. The protective device of any one of the preceding claims, **characterized in that** the switching device (3) has a signaling device for retransmitting the predefinable status detected by the status detection device (2).

## Revendications

1. Installation de protection (1) avec au moins un élément de protection (SD1, SD2) destiné à protéger un système électrique d'une détérioration et/ou d'une destruction par une perturbation, laquelle installation de protection (1) comporte un dispositif de reconnaissance d'état (2) qui surveille l'au moins un élément de protection (SD1, SD2) et qui est conçu pour effectuer des mesures d'un état prédéterminé de l'au moins un élément de protection (SD1, SD2), et un dispositif de commutation (3) activé par le dispositif de reconnaissance d'état (2), qui est conçu pour désactiver l'au moins un élément de protection (SD1, SD2) quand le dispositif de reconnaissance d'état (2) détecte l'état pouvant être déterminé de l'au moins un élément de protection (SD1, SD2), **caractérisée en ce que** l'installation de protection (1) comprend un élément de protection de remplacement (SD1 a, SD2a) activable par le dispositif de commutation (3), le dispositif de commutation (3) activant l'élément de protection de remplacement (SD1 a, SD2a) après que le dispositif de commutation (3) a désactivé l'élément de protection (SD1, SD2), **en ce que** la désactivation par le dispositif de commutation (3) n'a lieu qu'après un nombre pouvant être prédéterminé de mesures, chacune de ces mesures reconnaissant l'état pouvant être déterminé de l'au moins un élément de protection (SD1, SD2), et **en ce que** le dispositif de commutation (3) comprend un relais (R) avec un certain nombre de contacts d'ouverture (3a, 3b) et/ou de contacts de fermeture (3c, 3d), lequel relais (R) est réalisé comme un relais bistable.

2. Installation de protection selon la revendication 1, **caractérisée en ce que** l'état pouvant être prédéterminé est défini par une valeur de tension pouvant être prédéterminée.

3. Installation de protection selon l'une des revendications précédentes, **caractérisée en ce que** l'état pouvant être prédéterminé est fixé par une plage de valeurs de tension pouvant être prédéterminée.

4. Installation de protection selon l'une des revendications précédentes, **caractérisée en ce que** l'état pouvant être prédéterminé est fixé par une évolution de la tension pouvant être prédéterminée.

5. Installation de protection selon l'une des revendications précédentes, **caractérisée en ce que** les mesures effectuées par le dispositif de reconnaissance d'état (2) sont effectuées à des intervalles de temps pouvant être prédéterminés et/ou à des moments pouvant être prédéterminés.

6. Installation de protection selon l'une des revendications précédentes, **caractérisée en ce que** la désactivation de l'au moins un élément de protection (SD1, SD2) est réalisée comme une coupure unipolaire de l'élément de protection.

7. Installation de protection selon l'une des revendications précédentes, **caractérisée en ce que** la désactivation de l'au moins un élément de protection (SD1, SD2) est réalisée comme une coupure multipolaire ou sur tous les pôles de l'élément de protection.

8. Installation de protection selon l'une des revendications précédentes, **caractérisée en ce que** le dispositif de commutation (3) présente un dispositif indicateur (4) pour indiquer l'état pouvant être prédéterminé détecté par le dispositif de reconnaissance d'état (2).

9. Installation de protection selon l'une des revendications précédentes, **caractérisée en ce que** le dispositif de commutation (3) comprend un dispositif de signalisation pour la transmission de l'état pouvant être prédéterminé détecté par le dispositif de reconnaissance d'état (2).
